# FASCICULE DE BREVET EUROPEEN

(11) **EP 0 975 882 B1**
(45) Date de publication et mention de la délivrance du brevet: **02.05.2003**
(21) Numéro de dépôt: 99903761.7
(22) Date de dépôt: 15.02.1999
(51) Int. Cl.: F16D 13/58

(54) **MECANISME D'EMBRAYAGE, NOTAMMENT POUR VEHICULE AUTOMOBILE**
KUPPLUNGSVORRICHTUNG, INSBESONDERE FÜR KRAFTFAHRZEUGE
CLUTCH MECHANISM, IN PARTICULAR FOR MOTOR VEHICLE

(30) Priorité: 13.02.1998 FR 9801769
(43) Date de publication de la demande: 02.02.2000
(73) Titulaire: VALEO EMBRAYAGES, 80009 Amiens Cedex 1 (FR)
(72) Inventeur: DALBIEZ, André, F-95100 Argenteuil (FR)
(74) Mandataire: Gamonal, Didier
(86) Numéro de dépôt international: FR9900335
(87) Numéro de publication internationale: WO99041515

(56) Documents cités:
- DE-A- 4 222 045
- FR-A- 2 558 549
- FR-A- 2 608 704
- FR-A- 2 739 159
- GB-A- 2 120 329
- GB-A- 2 263 509
- GB-A- 2 296 541

## Description

La présente invention concerne les embrayages à friction, notamment pour véhicules automobiles, et se rapporte plus particulièrement à l'ensemble unitaire, que comporte un tel embrayage décrit par exemple dans les documents FR-A-2 242 892 et FR-A-2 420 690. Un tel ensemble unitaire est appelé mécanisme d'embrayage.

Classiquement, un embrayage à friction comporte un plateau de réaction appartenant à un volant moteur, éventuellement en deux parties pour formation notamment d'un volant amortisseur de torsion.

Ce plateau à réaction est solidaire en rotation d'un premier arbre, tel qu'un arbre menant, à savoir le vilebrequin du moteur à combustion interne dans le cadre d'une application à un véhicule automobile.

Ce plateau de réaction présente dorsalement une face de friction et est solidaire en rotation d'un plateau de pression pouvant se déplacer axialement par rapport au plateau de réaction appelé également volant moteur.

Ce plateau de pression présente frontalement une face de friction.

Les garnitures de friction d'un disque de friction sont intercalées entre les plateaux de pression et de réaction, plus précisément entre les faces de friction de ceux-ci.

Ces garnitures sont solidaires d'un support le plus souvent déformable élastiquement axialement. En variante, le support est rigide en étant, par exemple noyé à sa périphérie externe dans une unique garniture de friction. Ce support, éventuellement dédoublé, est relié rigidement ou élastiquement à un moyeu solidaire en rotation d'un deuxième arbre, tel qu'un arbre mené, à savoir l'arbre d'entrée d'une transmission du mouvement, par exemple, une boîte de vitesses, dans le cadre d'une application à un véhicule automobile.

Lorsque les garnitures de friction sont serrées entre les plateaux de pression et de réaction (embrayage engagé), le couple est transmis de l'arbre menant à l'arbre mené via le disque de friction. Lorsque les garnitures de friction ne sont pas serrées entre les dits plateaux (embrayage désengagé), l'arbre mené n'est pas entraîné par l'arbre menant. Pour ce faire, des moyens embrayeurs à action axiale sont prévus et forment un équipage avec des moyens débrayeurs prévus pour contrecarrer à volonté l'action des moyens embrayeurs prenant appui sur un couvercle pour action sur le plateau de pression, plus précisément pour action sur des moyens d'appuis portés par le plateau de pression solidaire en rotation du couvercle tout en pouvant se déplacer axialement par rapport à celui-ci, par exemple à l'aide d'une liaison à languettes axialement élastiques ou à l'aide d'une liaison du type tenons - mortaises ; des pattes radiales - formant tenons - du plateau de pression étant engagées à coulissement axial dans des rainures - formant mortaises - du couvercle.

Ce couvercle présente à sa périphérie externe, des moyens de fixation pour sa fixation au plateau de réaction de manière détachable ou non détachable.

Les moyens embrayeurs comportent au moins une rondelle Belleville et les moyens débrayeurs des leviers de débrayage pour action sur les moyens embrayeurs. Le plus souvent ces moyens embrayeurs et débrayeurs, appartiennent à une même pièce axialement élastique appelé diaphragme. Ce diaphragme, de forme tronconique à l'état libre, comporte une partie périphérique en forme de rondelle Belleville, prolongée radialement, vers le centre par une partie centrale fragmentée en doigts radiaux par des fentes borgnes à fonds élargis pour formation d'orifices élargis à la périphérie interne de la rondelle Belleville constituant les moyens embrayeurs à action axiale, tandis que les doigts radiaux forment des leviers de débrayage et donc les moyens débrayeurs de l'embrayage.

Dans les documents FR-A-2 242 892 ET FR-A-2 420 690, le couvercle constitue avec le plateau de pression, les languettes élastiques et le diaphragme, un ensemble unitaire appelé mécanisme d'embrayage, que l'on rapporte sur le plateau de réaction. Bien entendu, ce mécanisme d'embrayage peut constituer avec le disque de friction et le plateau de réaction, un module que l'on rapporte de manière unitaire sur le vilebrequin du moteur du véhicule ou sur un flasque solidaire du vilebrequin, le plateau de réaction se fixant alors sur le flasque avantageusement flexible.

Ce mécanisme peut être équipé d'un dispositif de rattrapage d'usure des garnitures de friction et des faces de friction des plateaux de pression et de réaction pour que le diaphragme ait une position sensiblement constante lorsque l'embrayage est engagé et ce, durant la durée de vie de l'embrayage à friction.

Ce dispositif de rattrapage d'usure comporte le plus souvent des rampes et des contre-rampes intervenant entre le plateau de pression et les moyens d'appui du diaphragme ou entre le diaphragme et le couvercle.

Un déclencheur, sensible à l'état de l'usure des garnitures de friction, permet de faire tourner les rampes en cas d'usure pour que le diaphragme occupe toujours la même position lorsque l'embrayage est engagé sous l'action des moyens embrayeurs (garnitures serrées).

Le déclencheur peut comporter un capteur d'usure élastique ou un système à roue à rochet et vis sans fin, appartenant à une cassette.

D'autres formes de réalisation sont envisageables.

Dans les documents précités, le couvercle présente un fond, d'orientation transversale, ouvert centralement et comportant des pattes de butées à sa périphérie interne.

C'est sur ces pattes de butée, d'orientation transversale, que s'appuient les doigts du diaphragme lorsque le mécanisme d'embrayage n'est pas encore fixé sur le plateau de réaction. Cette position est appelée position de stockage. Dans cette position, le diaphragme est très incliné et le plateau de pression fait saillie axialement par rapport à l'extrémité libre du couvercle.

Le plateau de pression est plus éloigné axialement du fond du couvercle qu'il ne l'est en position embrayage engagé. Dans cette position, le diaphragme à globalement une forme plane.

Comme visible dans le document FR-A-2 242 892 les pattes de butée sont réparties régulièrement circonférentiellement avec des pattes de fixation du diaphragme pour montage basculant du diaphragme entre un appui primaire et un appui secondaire portés par le couvercle. Les pattes de butée sont séparées, donc deux à deux, par des échancrures au milieu desquelles sont implantées les pattes de fixation.

L'appui primaire est formé par emboutissage du couvercle, et l'appui secondaire par les pattes de fixation traversant les orifices élargis du diaphragme. Bien entendu, comme visible à la figure 2 du document FR-A-2 420 690, l'appui secondaire est porté en variante par une couronne jonc.

Les pattes de butées peuvent constituer des pattes de fixation et porter notamment des rivets ou des colonnettes de fixation, ou tout autre moyen comme décrit dans le document FR-A-2 420 690.

La présente invention a pour objet de tirer partie des pattes de butée et ce de manière simple et économique.

Suivant l'invention, un mécanisme du type sus indiqué est caractérisé en ce qu'une pièce de support porte à sa périphérie externe des pattes de calage saillantes radialement vers l'extérieur, en ce que la pièce de support est en contact avec une moins une pluralité des leviers de débrayage, tandis que les pattes de calage sont en contact avec la face des pattes de butée tournée vers les leviers de débrayage en sorte que les pattes de calage et la pièce de support sont insérées axialement entre les leviers de débrayage et les pattes de butées par un montage du type baïonnette.

Grâce à l'invention, les pattes de calage et la pièce de support forment une cale ou entretoise insérée axialement, dans une forme de réalisation, entre le diaphragme et les pattes de butée pour maintenir le diaphragme dans une position prédéterminée lors du montage et/ou du démontage du mécanisme de débrayage.

La pièce de support avec ses pattes de calage constitue un outil de montage et/ou de démontage du mécanisme d'embrayage. Cela constitue également un outil de protection, notamment pour les languettes élastiques de liaison en rotation du plateau de pression avec le couvercle.

Dans tous les cas, on peut ne pas modifier le couvercle. Bien entendu, les leviers de débrayage peuvent appartenir à un faux diaphragme comportant une partie périphérique externe en forme de rondelle à faible élasticité axiale, voir sans élasticité axiale, prolongée par une partie centrale fragmentée en doigts radiaux par des fentes. Les doigts forment les leviers de débrayage de la même manière que les doigts du diaphragme. La rondelle peut être dotée de fentes radiales borgnes débouchant à la périphérie externe de la rondelle afin que celle-ci ne soit pas axialement élastique ou soit d'une faible élasticité axiale. Le faux diaphragme est adapté à agir sur une rondelle Belleville formant les moyens embrayeurs.

Ainsi dans tous les cas, il est prévu des leviers de débrayage montés de manière pivotante ou basculante grâce à des moyens de fixation portés par le couvercle et, grâce à la pièce de support avec ses pattes de calage, il est formé une cale qui permet de livrer le mécanisme d'embrayage dans une position correspondante à la position embrayage engagé, c'est-à-dire dans une position ou le plateau de pression est rentré à l'intérieur du couvercle.

Le mécanisme d'embrayage est alors moins encombrant axialement, ce qui facilite son montage sur le plateau de réaction, les garnitures de friction étant avant son montage et sa fixation, intercalées entre les plateaux de pression et de réaction.

En outre, les vis de fixation du couvercle au plateau de réaction peuvent être plus courtes et donc moins coûteuses puisque le plateau de pression est rentré à l'intérieur du couvercle. Les taraudages réalisés dans le plateau de réaction pour le vissage des vis de fixation sont également plus courts en sorte que la résistance du plateau de réaction est augmentée.

Ces vis de fixation peuvent être remplacées par des rivets ou d'autres organes de fixation plus courts axialement grâce à l'invention.

La solution, selon l'invention, est donc économique et facilite la fixation du couvercle puisque le diaphragme est livré dans une position correspondante à la position embrayage engagé lorsque le mécanisme est fixé sur le plateau de réaction.

Ainsi, la charge qu'exerce le diaphragme est inférieure à la charge maximum que celui-ci peut exercer. Lors du vissage ou du rivetage du couvercle sur le plateau de réaction, il n'y a pas lieu, compte tenu que les garnitures de frictions sont intercalées entre les plateaux de pression et de réaction, de déplacer le plateau de pression d'une position initiale à une position correspondante au maximum de la force exercée par le diaphragme sur le plateau de pression puisque le diaphragme se trouve déjà au-delà de cette position.

Lors de ce montage, le disque de friction est inséré entre les plateaux de pression et de réaction en sorte que, compte tenu de la position précitée du diaphragme, il ne reste qu'à écraser le support élastique des garnitures de friction.

Le serrage des vis de fixation se fait donc de manière aisée. Il en est de même lorsque le couvercle est fixé au plateau de réaction, par exemple par sertissage. Il en va de même lorsque les moyens embrayeurs consistent en une rondelle Belleville.

Cette configuration est intéressante dans le cas ou le mécanisme d'embrayage est équipé d'un dispositif de rattrapage d'usure car le montage conduit à une configuration dans laquelle l'embrayage est en position embrayage engagé neuf (garnitures de friction non usées).

On peut grâce aux pattes de calage, selon l'invention, incliner légèrement le diaphragme, c'est-à-dire le placer dans une position de début de débrayage.

Dans ce cas, il n'y a pas au montage à compresser le support des garnitures de friction.

La fixation du couvercle est encore plus aisée ; le plateau de pression pouvant être décollé lors du montage par rapport aux garnitures de friction.

On voit alors que l'on peut se servir des pattes selon l'invention pour démonter un module. En effet, on peut démonter directement le plateau de réaction sans avoir à démonter le mécanisme d'embrayage.

Il suffit, compte tenu que le plateau de pression est alors décollé par rapport aux garnitures de friction, d'amener en coïncidence axiale les trous pratiqués dans le disque de friction et dans le diaphragme. On passe alors le ou les outil(s) de dévissage à travers les dits trous alignés afin d'avoir un accès aux têtes des vis de fixation du plateau de réaction au vilebrequin pour dévisser les vis et démonter le module. En variante, le mécanisme se monte sur un double volant amortisseur à ressorts radiaux et palier de faible taille, implanté radialement en dessous de trous de passages pratiqués dans le plateau de réaction comme décrit dans le document FR-A-2 716 511.

Bien entendu, le diaphragme peut être incliné dans l'autre sens.

Dans tous les cas, on protège le dispositif de rattrapage d'usure, notamment l'organe élastique porté par la cassette de celui-ci ou son organe élastique de détection d'usure. En effet, grâce à la pièce de support à pattes de calage, on peut fixer aisément, en final, le plateau de pression sans endommager le dispositif de rattrapage d'usure.

Les pattes, selon l'invention, sont donc des pattes de montage et/ou de démontage, et/ou de protection.

La largeur circonférentielle des pattes selon l'invention peut être inférieure ou supérieure à celle des pattes de butée.

Le diamètre externe des pattes de calage est avantageusement inférieur à celui du diamètre interne des pattes de fixation ou des colonnettes de fixation ou tout autre moyen de fixation du diaphragme porté par les pattes de butée.

D'une manière générale, on introduit les pattes de calage selon l'invention dans les échancrures séparant deux à deux les pattes de butée, puis en agissant sur la pièce de support des pattes de calage, on déforme le diaphragme au niveau de son extrémité interne d'une grandeur supérieure à la position recherchée du diaphragme et enfin, on tourne la pièce du support pour amener les pattes selon l'invention sous les pattes de butée.

Après cette rotation, on relâche l'effort exercé sur la pièce ce support, avantageusement en forme de plaque circulaire ouverte centralement, en variante, en forme de cintre circulaire ouvert. La largeur circonférentielle des pattes de calage dépend donc de la largeur circonférentielle de l'échancrure existant entre des pattes de butée consécutives, pour que les pattes de calage puissent pénétrer dans les échancrures pour le montage baïonnette.

Pour faire tourner les pattes de calage, on dote la pièce de support d'ouvertures. Ces ouvertures, tels que des trous, permettent également le passage du ou des outil(s) de vissage ou de dévissage des vis de fixation du plateau de réaction au vilebrequin du moteur.

On voit ainsi que le couvercle peut être fixé de manière non détachable au plateau de réaction par exemple par soudage ou sertissage pour formation d'un module avec le disque de friction.

Bien entendu, la pièce de support peut être en forme d'anneau avec des pattes à sa périphérie interne pour faire tourner celle-ci.

D'autres avantages apparaîtront à la lumière de la description en regard des dessins annexés dans lesquels :
- la figure 1 est une vue de face d'un mécanisme d'embrayage selon l'invention avec des arrachements locaux pour montrer le diaphragme, les languettes tangentielles, les moyens à rampes et la cassette du dispositif de rattrapage d'usure ;
- la figure 2 est une vue à plus grande échelle du centre de la figure 1 ;
- la figure 3 est une vue en coupe selon la ligne A-A de la figure 1 ;
- la figure 4 est une vue en coupe selon la ligne B-B de la figure 1 ;
- les figures 5, 6 sont des vues selon les flèches respectivement C et D de la figure 1 ;
- la figure 7 est une vue en coupe selon la ligne E-E de la figure 1 ;
- la figure 8 est une vue selon la flèche F de la ligne 1 ;

La figure 9 est une vue analogue à la figure 3 pour un second exemple de réalisation ;

Ces figures représentent un mécanisme d'embrayage formant un ensemble unitaire que l'on vient rapporter sur un plateau de réaction, éventuellement divisé pour formation d'un volant amortisseur, avec insertion d'un disque de friction entre le plateau de réaction et le plateau de pression que comporte le mécanisme d'embrayage.

S'agissant d'une application pour véhicule automobile, le plateau de réaction est solidaire en rotation du vilebrequin du moteur à combustion interne, formant arbre menant, tandis que le disque de friction présente à sa périphérie externe des garnitures de friction solidaires, par exemple par rivetage ou par une liaison dépourvue de rivets de fixation, d'un support, éventuellement dédoublé, déformable élastiquement, axialement et accouplé de manière rigide ou élastique à un moyeu solidaire en rotation, ici de l'arbre d'entrée de la boîte de vitesses, formant arbre mené.

Ce sont les garnitures de fixation qui sont donc destinées à être serrées de manière débrayable entre les plateaux de pression et de réaction pour transmission du couple du moteur de véhicule à l'arbre d'entrée de la boîte de vitesses. Pour ce faire, des moyens embrayeurs à action axiale sont prévus pour serrer les garnitures de friction entre une face de friction 11, que présente frontalement le plateau de pression 1, et une face de friction, que présente dorsalement la plateau de réaction, qui peut être porté par un disque flexible solidaire du vilebrequin.

Les moyens embrayeurs forment un équipage avec les moyens débrayeurs prévus pour contrecarrer à volonté l'action des moyens embrayeurs qui prennent appui, d'une part, sur un couvercle 2 et, d'autre part, sur des moyens d'appui 3, portés par le plateau de pression 1, plus précisément par la face dorsale de celui-ci.

Les moyens débrayeurs comportent des leviers de débrayage sur les extrémités internes desquels agit une butée de débrayage commandée manuellement, de manière mécanique ou hydraulique, ou semi-automatique ou automatiquement. La butée peut être donc manoeuvrée par un actionneur à moteur électrique piloté selon des programmes prédéterminés par un calculateur recevant des information notamment sur les vitesses de rotation des arbres menant et mené et sur l'intention du conducteur de changer de vitesses. L'actionneur peut être relié hydrauliquement ou mécaniquement à la butée de débrayage. Ainsi, la butée de débrayage peut appartenir à un récepteur hydraulique du type concentrique traversé par l'arbre d'entrée de 1a boîte de vitesses et relié à un émetteur hydraulique manoeuvré par l'actionneur ou manuellement.

Dans les figures, les moyens embrayeurs et débrayeurs appartiennent à une même pièce appelée diaphragme 4.

Ce diaphragme est de forme tronconique à l'état libre et présente une courbe caractéristique (force exercée en fonction de sa déflexion) de forme sinusoïdale. Ainsi, en partant de l'origine, la courbe caractéristique croit jusqu'à un maximum puis décroît jusqu'à un minimum pour croître de nouveau. En position embrayage engagé, le diaphragme occupe une position dans la partie décroissante de sa courbe caractéristique, au voisinage de son maximum.

On obtient la même courbe caractéristique avec une rondelle Belleville.

Pour mémoire, on notera que le diaphragme 4 comporte une partie périphérique externe en forme de rondelle Belleville 41 constituant les moyens embrayeurs. Cette partie périphérique est prolongée radialement vers le centre par une partie centrale fragmentée en doigts radiaux 42, par des fentes borgnes 43.

Les doigts 42 forment des leviers de débrayage, tandis que les fentes 43 débouchent à leur périphérie interne dans l'ouverture centrale du diaphragme 4 et à leur périphérie externe dans des orifices élargis 44 formant les fond borgnes des fentes 43. Ces orifices 44 ont ici une forme rectangulaire.

Dans ces figures, le mécanisme d'embrayage comporte donc de manière unitaire un ensemble de pièces annulaires, à savoir, un plateau de pression 1, un couvercle 2 et un diaphragme 4, prenant appui, d'une part, sur le couvercle 2, et, d'autre part, sur les moyens d'appui 3 pour serrage des garnitures de friction entre les faces de friction des plateaux de pression 1 et de réaction.

Le plateau de pression 1, en matière moulable, ici en fonte, comme le plateau de réaction, est lié en rotation au couvercle 2 tout en pouvant se déplacer axialement par rapport à celui-ci, ici à l'aide de languettes 10, élastiquement déformables axialement. Les languettes 10 sont ici d'orientation tangentielle et sont fixées, ici, par rivetage, à l'une de leurs extrémités au couvercle et à l'autre de leurs extrémités au plateau de pression 1, plus précisément, chacune à une patte 12 du plateau 1 saillante radialement vers l'extérieur.

En variante, les pattes 12, formant tenons, sont engagées, dans des rainures axiales, formant mortaises du couvercle 2.

Les languettes 10 constituent des moyens de rappel du plateau de pression. Plus précisément, le couvercle 2 présente, d'une part, un fond 21 troué centralement et d'orientation transversale et, d'autre part, des moyens de fixation 22 du couvercle 2 au plateau de réaction.

Dans les figures représentées, le couvercle a une forme d'assiette creuse et comporte un rebord radial d'extrémité 22 dirigé radialement en direction opposée à l'axe de symétrie axiale X-X que présente le mécanisme d'embrayage. Ce rebord 22 se raccorde par une jupe annulaire 23 d'orientation axiale, au fond 21. La jupe 23 est étagée en diamètre et ouverte au niveau des languettes 10, qui rappellent élastiquement le plateau de pression en direction du fond du couvercle 2.

Le rebord 22 constitue les moyens de fixation et est fragmenté en plages 27, 28 décalées axialement pour la fixation des languettes 10 et pour la fixation au plateau de réaction. Les plages de fixation 27 au plateau de réaction sont trouées pour le passage d'organes de fixation au plateau de réaction, ici, des vis. Le diaphragme 4 s'appuie à la périphérie externe de sa rondelle Belleville 41 sur les moyens d'appuis 3, tandis que la périphérie interne de sa rondelle Belleville 41 est montée de manière basculante entre deux appuis en vis à vis, respectivement un appui secondaire 25 porté par des pattes de fixation 26.

Les pattes de fixation 26 sont issues par découpe et pliage de la périphérie interne du fond 21 du couvercle 2, ici en tôle emboutie.

Les pattes 26 sont réparties circonférentiellement de manière régulière et sont d'orientation axiale.

Les pattes 26 traversent axialement les orifices élargis 44 du diaphragme 4 et ont, au-delà du diaphragme 4, une extrémité libre pliée radialement vers l'extérieur, c'est-à-dire radialement en direction opposée à l'axe de l'ensemble pour formation d'un coude de calage pour une couronne jonc 125, de forme tronconique, présentant à sa périphérie externe une arête arrondie 25 constituant l'appui secondaire. L'appui primaire 24 a la forme d'un jonc annulaire formé ici par emboutissage du fond 21 du couvercle 2. Ce jonc 24 est ici fragmenté.

En variante, ce jonc 24 est rapporté sur le couvercle 2. La périphérie interne de la rondelle Belleville 41 du diaphragme est intercalée axialement entre ces appuis 24, 25 en vis à vis l'un de l'autre. En position embrayage engagé, le diaphragme 4 est en appui sur l'appui primaire 24 et sur les moyens d'appuis 3 du plateau de pression.

En agissant en poussant sur les extrémités internes des doigts 42 du diaphragme 4 à l'aide d'une butée de débrayage (non représentée), on fait basculer le diaphragme 4, qui prend alors appui sur l'appui secondaire 25, pour annuler la charge qu'il exerce sur le plateau de pression 1 via les moyens d'appui 3 ; les languettes 10 rappelant le plateau de pression en direction du fond 21 du couvercle 2 pour libérer les garnitures de friction et désengager l'embrayage.

Bien entendu, l'appui secondaire peut être discontinu en étant formé par les extrémités libres des pattes de fixation 26 conformées en conséquence dans le document FR-A-2 242 892 précité.

Les pattes de fixation 26 alternent ici circonférentiellement avec des pattes de butée 5, d'orientation transversale.

Ces pattes de butée sont issues d'un seul tenant du fond 21 du couvercle par découpe et s'étendent à la périphérie interne du fond 21 du couvercle 2, qui a intérieurement ainsi une forme dentelée.

Pour plus de précisions, on se reportera au document FR-A-2 242 892 montrant les pattes de fixation 26 avant leur pliage et les pattes de butée 5, qui sont plus larges circonférentiellement que les pattes de fixation 26.

Les pattes de butée 5 recouvrent ici une fente 43 séparant deux doigts 42 consécutifs.

Bien entendu, tout cela dépend de la taille du couvercle. Les pattes de butée 5 forment donc une butée pour au moins deux doigts 42, formant leviers de débrayage. Ces pattes de butée 5 ont ici une forme trapézoïdale. Le diamètre interne des pattes de butée 5 est inférieure au diamètre interne des pattes de fixation 26 après pliage. Les pattes 5, 26 s'étendent radialement en dessous de l'appui primaire 24 de forme annulaire. Une échancrure 6 sépare deux pattes de butée 5 consécutives. Une patte de fixation 26 est implantée au milieu de l'échancrure 6 pour pénétrer axialement dans un orifice élargi 44 du diaphragme 4.

La périphérie interne des pattes de butée 5 s'étend radialement en dessous des orifices élargis 44. Les pattes de fixation 26 constituent des moyens de fixation pour montage basculant ou pivotant du diaphragme 4 sur le couvercle. En variante, on peut supprimer les pattes de fixation et le couvercle peut ne comporter que des pattes de butée comme décrit dans le document FR-A-2 420 690. Dans ce cas, les pattes de fixation sont trouées pour montage d'une pièce annulaire en forme de peigne, de colonnettes à tête profilée formant appui secondaire, etc. Toutes les formes de réalisation, telles également les agrafes, des colonnettes portant deux jonc d'appui etc., décrite dans ce document FR-A-2 420 690, auquel on se reportera pour plus de précisions, sont envisageables. Les pattes de butée 5, en forme de languette, peuvent donc être des pattes de fixation. En variante, on coupe l'extrémité des pattes de fixation 26 pour ne conserver que la partie axiale de celle-ci. Les pattes 26 forment alors des pattes de centrage et les pattes de butée 5, des pattes de fixation de manière précitée. En variante, le couvercle ne présente des pattes de butée, dont certaines forment des pattes de fixation.

En variante, les pattes de fixation 26 peuvent porter un faux diaphragme, c'est-à-dire une pièce dont la partie centrale est fragmentée en doigts comme celle d'un diaphragme, tandis que la partie périphérique annulaire est dépourvue d'élasticité ou présente une faible élasticité. Par exemple cette partie périphérique annulaire, en forme de rondelle, est dotée de fentes radiales borgnes débouchante radialement à la périphérie externe du faux diaphragme et de la partie annulaire en forme de rondelle.

La rondelle du faux diaphragme est donc globalement plate à l'état libre ainsi que le faux diaphragme.

Une rondelle Belleville prend alors appui à sa périphérie externe sur le couvercle et a sa périphérie interne sur la rondelle périphérique du faux diaphragme. Un tel exemple de réalisation est décrit dans le document DE-A-4 326 501 auquel on se reportera pour plus de précisions.

Bien entendu, à la lumière de ce document, on voit que le faux diaphragme peut être remplacé par une pluralité de leviers de débrayage individuels montés de manière basculante ou pivotante sur le couvercle par l'intermédiaire des moyens de fixation portés par le couvercle, avec intervention de deux rondelles Belleville montées en série pour formation des moyens embrayeurs.

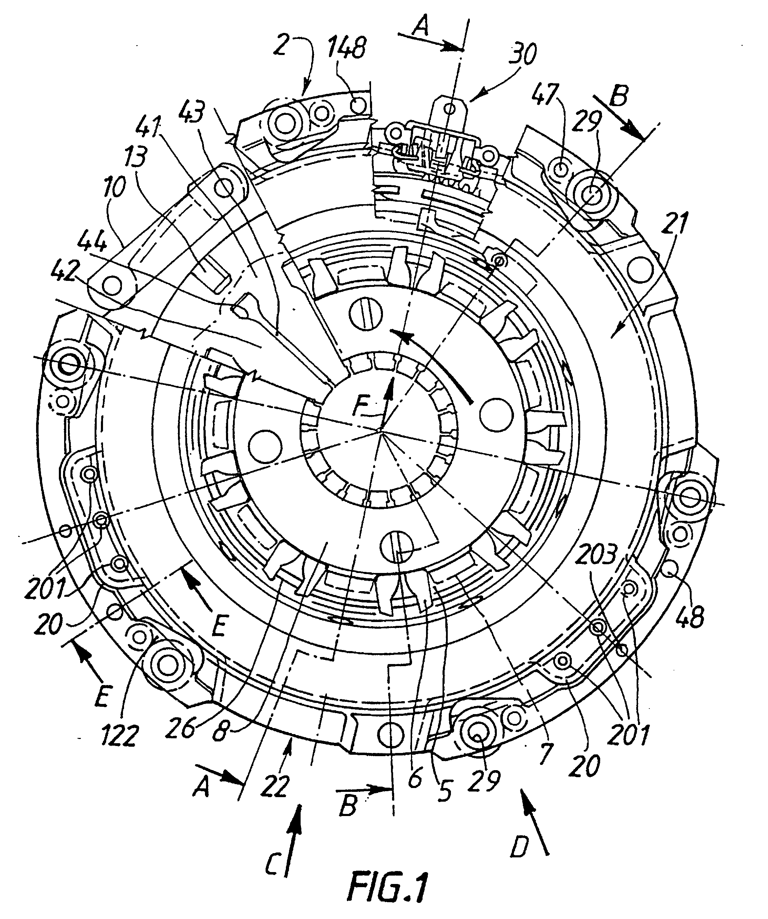

Dans tous les cas, le couvercle 2 porte des leviers de débrayage 42 montées de manière pivotante ou basculante sur le couvercle 2 et les moyens embrayeurs peuvent comporter deux rondelles Belleville montées en série comme dans le document DE-A-4 326 501 ou un diaphragme montée en série avec une rondelle d'assistance comme décrit dans le document FR-A-9 711 058 du 5 septembre 1997 qui divulgue, par ailleurs un dispositif de rattrapage d'usure à roue à rochet - vis sans fin et denture, du type de celui du mode de réalisation de la figure 1 de la présente invention.

De nombreux embrayages dotés d'un couvercle à pattes de butée, formant éventuellement pattes de fixation, sont fabriqués actuellement.

La présente invention tire partie de ce type de couvercle pour insérer une cale entre les pattes de butée et les leviers de débrayage afin de pouvoir livrer au constructeur automobile ou au garagiste, un mécanisme d'embrayage neuf ou reconditionné dans une position de livraison dans laquelle le plateau de pression est plus près du fond 21 du couvercle 2, qu'il ne l'est en position de stockage lorsque les leviers de débrayage sont en appui contre les pattes de butées.

Suivant l'invention, un mécanisme du type sus indiqué est caractérisé en ce qu'une pièce de support 8 porte à sa périphérie externe des pattes de calage 7 saillantes radialement vers l'extérieur, en ce que la pièce de support 8 est en contact avec au moins une pluralité des leviers de débrayage 42, tandis que les pattes de calage 7 sont en contact avec la face des pattes de butée 5 tournée vers les leviers de débrayage 42 en sorte que les pattes de calage 7 et la pièce de support 8 sont insérées axialement entre les leviers de débrayage 42 et les pattes de butées 5 par un montage du type baïonnette.

Dans les figures, la pièce de support 8 à une forme annulaire et présente des moyens 9 pour venir en prise avec un outil permettant de faire tourner la pièce de support.

Ces moyens 9 consistent ici en des trous. L'anneau 8 formant la pièce de support, s'étend radialement en dessous des pattes de butée 5 et radialement au-dessus de la périphérie interne des doigts 42 du diaphragme, au voisinage de ladite périphérie interne.

L'anneau est ici fermé en étant en contact avec tous les doigts du diaphragme 4. L'anneau 8 a une grande hauteur en sorte qu'il constitue une plaque circulaire ouverte centralement.

Ainsi, les pattes 8 sont introduites initialement dans une échancrure 6 séparant deux pattes de butée 5 consécutives. En appuyant sur l'anneau 8, on déplace les doigts du diaphragme 4. On fait alors tourner à l'aide d'un outil l'anneau 8 pour amener les pattes de calage 7 sous les pattes de butée 5, après, on relâche la charge exercée sur l'anneau 8. Les pattes de calage 7 sont ici circonférentiellement moins large que le pattes de butée 5 de forme trapézoïdale.

Plus précisément, les pattes de calage 7 ont ici une forme globalement rectangulaire avec des arêtes arrondies. La longueur circonférentielle de la patte 7, plus longue circonférentiellement que haute, est globalement égale à la longueur circonférentielle de la périphérie interne de la patte de butée 5. Les pattes 7 s'étendent radialement en dessous des pattes de fixation 26. En variante, les pattes 7 peuvent avoir une autre forme par exemple trapézoïdale, triangulaire, semi-circulaire ou carré.

L'outil permettant de faire tourner l'anneau 8 présente des pions engagés dans les trous 9.

Bien entendu, l'anneau 8 peut être ouvert et ainsi ne pas venir en contact avec tous les doigts 42 du diaphragme. Il est, dans ce cas, en forme de cintre circulaire.

Le nombre de pattes de calage 7 dépend des applications. Ici, une patte de calage 7 est prévu par patte de butée. Bien entendu, le nombre de pattes de calage 7 peut être inférieur au nombre de pattes de butée 8.

Il est prévu au moins deux pattes de calage en position diamétralement opposée.

Bien entendu, les trous 9 peuvent être remplacés par des échancrures ou des pattes formées à la périphérie interne de l'anneau 8.

Dans toutes les figures, la partie centrale du fond 21 du couvercle à la même forme et on voit une flèche symbolisant le sens de rotation de l'anneau 8 lors de son démontage.

L'anneau 8 est ici d'un seul tenant avec les pattes 7 et est en tôle emboutie.

Cet anneau peut être doté d'un revêtement à faible coefficient de frottement au niveau de sa portion destinée à venir en contact avec les doigts 42 et au niveau de la face externe des pattes 7 tournée en direction opposée du diaphragme.

Cette disposition facilite la rotation de la pièce de support 8.

Bien entendu, l'anneau 8 peut être en une autre matière par exemple en matériau composite renforcé par des fibres ou à base d'aluminium. Il peut donc être en matière moulable.

Grâce à la cale, selon l'invention, les vis de fixation du couvercle 2 ou plateau de réaction peuvent être plus courtes et les languettes sont protégées avant fixation du mécanisme d'embrayage au plateau de réaction. La pièce de support 8 avec ses pattes 7, constitue un outil de montage du mécanisme d'embrayage sur le plateau de réaction, que l'on enlève après la fixation du couvercle sur ledit plateau de réaction. L'inverse est possible en sorte que cela peut constituer un outil de démontage permettant de décoller les garnitures de friction du plateau de pression 1.

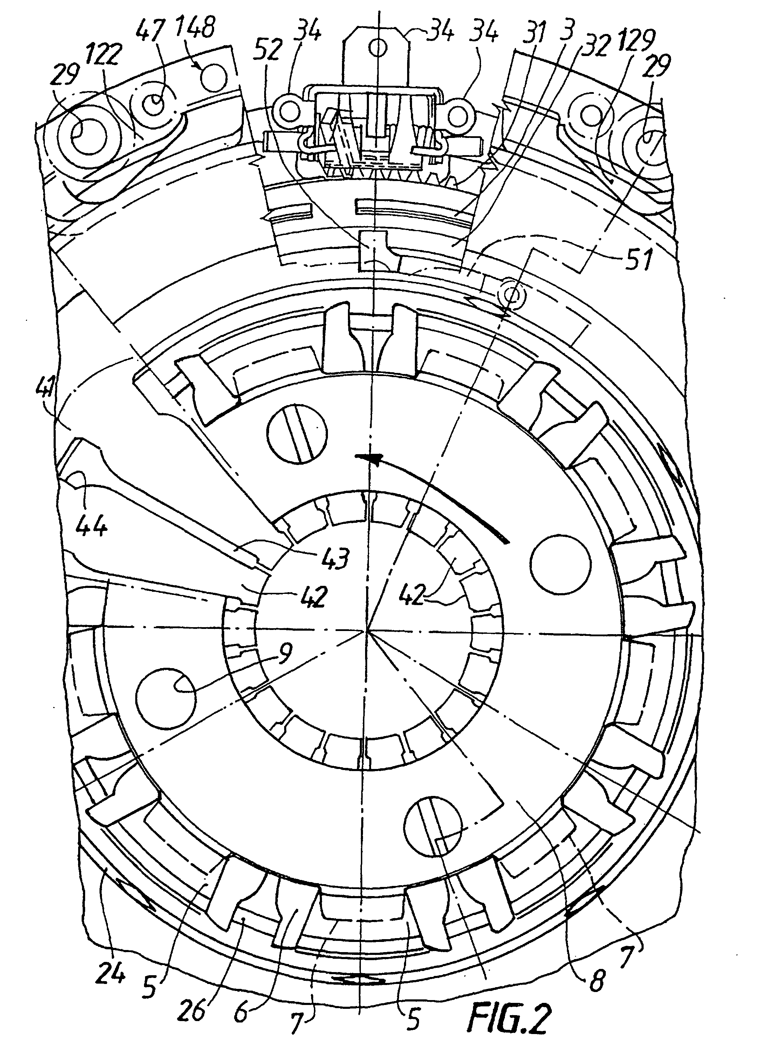

Dans les figures 1 à 8, l'anneau 8 avec ses pattes monoblocs permet le montage d'une cassette 30 appartenant à un dispositif de rattrapage d'usure permettant, en service, de compenser l'usure due principalement aux garnitures de friction du disque de friction. La cassette 30 est montée sur le couvercle 2 avant la fixation du plateau de pression 1 au couvercle.

Plus précisément, on fixe d'abord le diaphragme 4 sur le couvercle 1 à l'aide des pattes de fixation 26 de manière précitée, le diaphragme 4 étant monté basculant entre les deux appuis 24, 25. Ensuite, on monte de manière précitée l'anneau 8 avec ses pattes 7 entre les pattes de butée 5 et la périphérie interne des doigts 42 du diaphragme 4. Le diaphragme occupe alors une position plane correspondante à celle qu'il occupe une fois que le mécanisme d'embrayage est monté sur le couvercle 2.

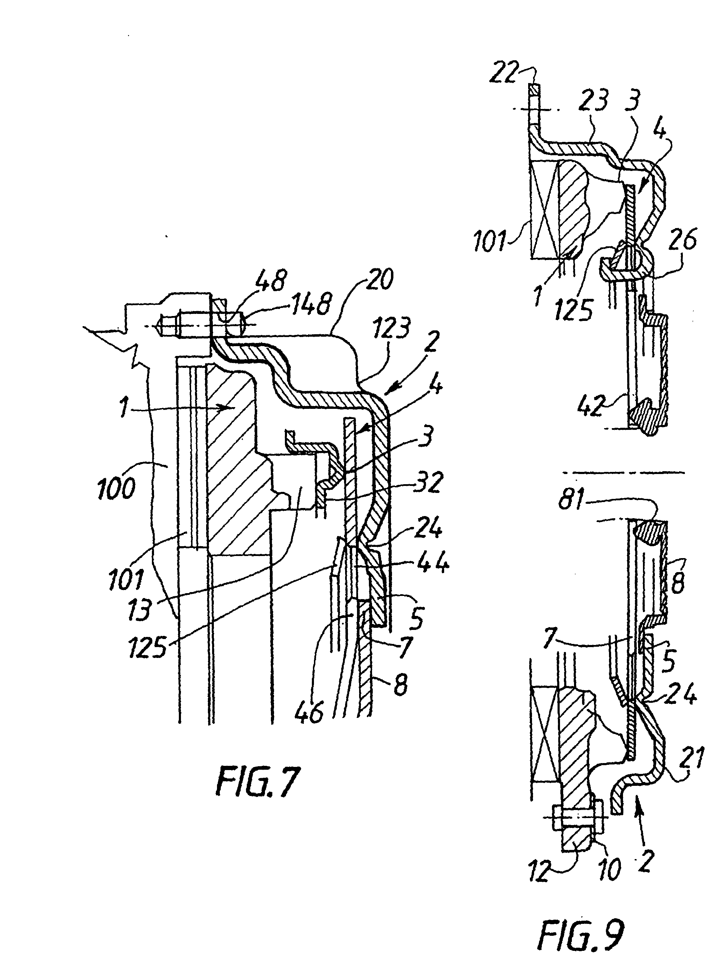

Dans cette position, l'embrayage est engagé. A la figure 7, on a représenté de manière schématique en 100 le plateau de réaction et en 101 le disque de friction, plus précisément les garnitures de friction de celui-ci.

Le dispositif de rattrapage d'usure maintient le diaphragme dans cette position, qui correspond à la position embrayage engagé neuf. Après, on fixe la cassette 30 et on procède à une opération de prééquilibrage.

Puis on approche le plateau de pression 1 porteur ici de moyens à rampes 32 et donc d'épaisseur variable de manière décrite ci-après.

Ensuite, on monte le plateau de pression 1 sur le couvercle 2. Plus précisément, le plateau 1 étant équipé des languettes 10, on fixe les autres extrémités des languettes 10 au couvercle 2.

Enfin, on procède en final à une opération d'équilibrage.

Ici, la cassette 30 est montée dans un logement 20 formé en surépaisseur, ici par emboutissage, dans le couvercle 2, au niveau de son rebord de fixation 22. Le logement 20 affecte le rebord 22 ainsi que la jupe 23 du plateau surélevé ainsi au niveau des logements 20.

Le fond du logement 20 est formé par une zone de raccordement 123 de la jupe 23 au fond 21 du couvercle. Une fenêtre 121 est formée dans cette zone 123.

Le nombre des languettes 10 dépend des applications. Ici, trois jeux de languettes 10, éventuellement superposées, sont prévus ainsi que trois logements 20. Les logements 20 et les languettes 10 sont réparties circonférentiellement de manière régulière et ce de manière alternée.

Un seul des logements 20 est doté d'une fenêtre 121, à savoir celui servant à loger la cassette 30.

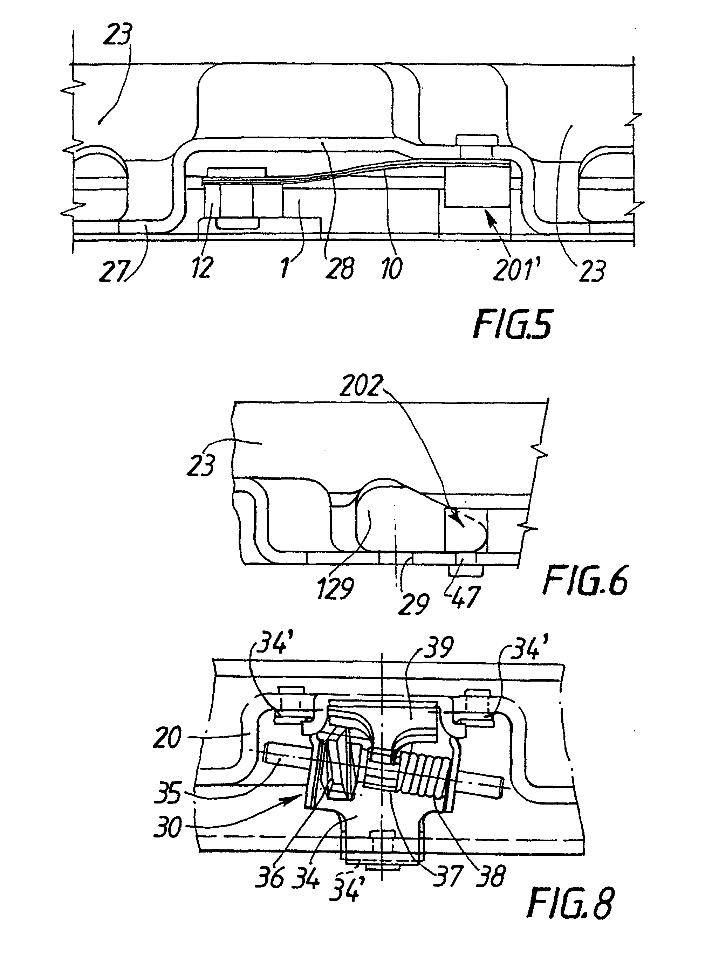

La cassette 30, décrite ci-après, crée un déséquilibrage. Pour cette raison, on réalise avant montage du plateau de pression 1, un prééquilibrage à l'aide de rivets 201 de prééquilibrage montés sur les fonds 123 non troués des logements 20. Trois rivets 201 sont prévus par logement 20, non affectés au logement de la cassette. Un autre rivet de prééquilibrage 201' est prévu diamétralement opposé à la cassette 30. Ce rivet 201' sert à la fixation d'un jeu de languettes 10 au couvercle 2, comme visible à la figure 5. Le plateau de pression 1 est entaillé localement au niveau du rivet 201'. Tout ceci est du fait que le plateau de pression est entaillé au niveau de la cassette 30 pour créer un dégagement.

En final, on place des rivets d'équilibrage 202 aux endroits souhaités pour équilibrer le mécanisme d'embrayage.

Le rebord 22 présente à cet effet, par avance, des trous d'équilibrage 47 pour le montage du ou des rivets d'équilibrage 202. Pour ce faire, de nombreux trous 47 doivent être prévus pour placer les rivets 202.

Le rebord 22 présente également, d'une part, des trous de fixation 29, pour passage des organes de fixation - tels que des vis ou des rivets - du rebord 22 au plateau de réaction et, d'autre part, des trous de centrage 48 pour le passage de pions de centrage 148 (figure 7) portés par le couvercle.

Des ouvertures 129 sont réalisées dans la jupe 23, au niveau des trous de fixation 29 pour le passage ici des têtes des vis de fixation du couvercle 2 au plateau de réaction.

Les ouvertures 129 ont une forme non symétrique. Plus précisément, on voit en pointillé, à la figure 1, l'encombrement d'une tête d'une vis de fixation et d'un rivet d'équilibrage 202. Les trous de fixation 29 et d'équilibrage 47 sont voisins l'un de l'autre. Une paire de trous 29, 47 est prévue par ouverture 129, permettant ainsi d'augmenter la surface d'appui du rebord 22 à ce niveau pour les têtes des vis de fixation. L'ouverture 129 est donc allongée circonférentiellement et est plus profonde au niveau du trou 29 ; chacun des trous 29, 47 étant implanté à l'extrémité circonférentielle d'une ouverture 129.

Chaque rivet d'équilibrage 202 est fixé, comme les vis de fixation, au niveau d'une zone élargie 122 du rebord 22, formée à la faveur de l'ouverture 129.

Le rivet 202 ne déborde pas de la zone 122, tandis que les têtes de vis de fixation débordent par rapport aux zones 122. Des ouvertures supplémentaires 203 sont prévues dans le rebord 22 au-dessus des logements 20.

Le rebord 22 comporte ainsi trois plages de fixation 27 pour contact avec le plateau de réaction 100, ici légèrement de forme creuse comme visible à la figure 7. Ces plages 27 (figure 5) alternent circonférentiellement avec les plages 28, décalées axialement par rapport au plage 27 en direction du fond 21 du couvercle 2 pour fixation, ici par rivetage, des languettes 10, au couvercle. La jupe 23 est donc ouverte à ce niveau ce qui permet le passage de pattes de fixation 12, que présente le plateau de pression 1, en saillie radiale à sa périphérie externe. Les plages 27 servant à la fixation du couvercle 2, sont plus longues que les plages 28 de fixation des languettes reliées de manière continue aux plages 27, pour formation d'un auvent (figure 5).

Les plages 27 sont affectées centralement par des logements 20 en étant moins larges à cet endroit. Chaque extrémité d'une plage 27 est affecté d'une zone élargie 122 et d'une ouverture 129.

Les trous 29, 47 sont donc disposées, ainsi que les zones 122, de part et d'autre d'un logement 20 aux extrémités d'une zone.

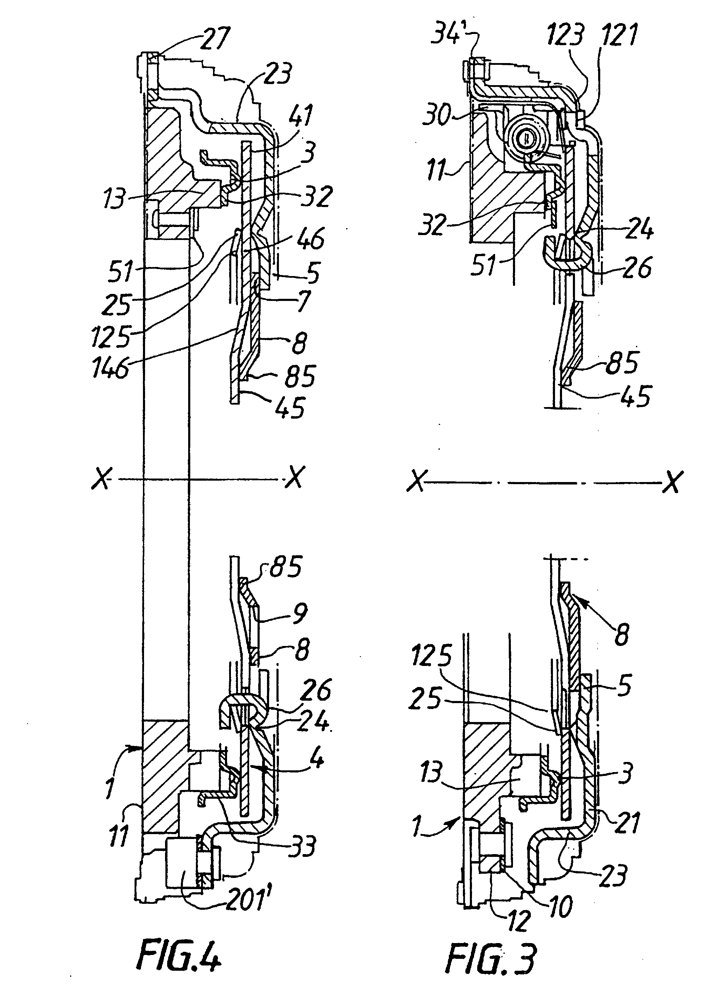

Ceci permet de bien équilibrer le mécanisme d'embrayage. Il en est d'autant plus ainsi que, figure 3, le plateau de pression est entaillé pour créer un dégagement pour la cassette 30. Cette cassette 30 comporte un support 34 en forme de U avec une âme s'étendant au contact de la déformation de la jupe 23 formant le sommet du logement 20 et deux ailes sont trouées par le passage d'un axe 35, solidaire d'une vis sans fin 36, monobloc avec une roue à rochet 37, interposées entre les deux ailes du support 34. La vis 36 est adjacente à l'une des ailes, tandis qu'un ressort hélicoïdal de rattrapage 38 est interposé entre la roue à rochet et l'autre aile.

L'axe 34 est rapporté à l'intérieur de la vis 36 et de la roue 37, par exemple par emmanchement à force.

Un organe élastique 39 est monté au contact de la face interne de l'âme du support et la vis 36 et entre l'autre aile du support et le ressort 38 (figure 8).

L'organe élastique 39, moins épais que le support 34 et métallique, présente un rebord en oblique prolongé par un retour portant une languette de commande coopérant avec les dents de la roue à rochet 37, et avec un actionneur formé par un appendice externe de la rondelle Belleville 41 du diaphragme. Un cliquet anti-retour est découpé dans le rebord en oblique pour coopérer avec les dents de la roue à rochet. Le cliquet et la languette de commande sont visibles à la figure 3 mais ne sont pas référencés. Le retour portant la languette de commande à une forme non symétrique car l'axe 35 est incliné.

Le support 34 comporte trois pattes de fixation 34', pour sa fixation par rivetage respectivement au rebord 22 et à la zone 123 et donc au couvercle.

La vis sans fin 36 est disposée tangentiellement par rapport à une denture 31 s'étendant radialement vers l'extérieur en direction opposée de l'axe X-X de symétrie axiale du mécanisme d'embrayage et de l'embrayage.

La denture 31 se raccorde à un rebord annulaire d'orientation axiale 33 en contact intime par sa périphérie interne avec la périphérie externe d'une surépaisseur fragmentée en plots 13, que présente dorsalement en saillie axiale le plateau de pression. Le rebord 33 se raccorde à un bossage annulaire fragmenté. Ce bossage constitue les moyens d'appui 3 pour la périphérie externe de la rondelle Belleville 41 du diaphragme.

Radialement, en dessous du bossage 3, il est prévu des rampes 32 pour coopérer avec la face d'extrémité transversale, avantageusement chanfreinée, des plots 13 formant contre-rampes. Ainsi, en cas d'usure, le diaphragme agit par son actionneur externe sur la languette de commande pour faire tourner la roue à rochet lors de l'opération de réembrayage afin d'armer le ressort 38, le cliquet anti-retour empêchant une rotation en sens inverse de la roue 37 et donc de la vis 36, qui peut entraîner la denture 31 mais pas l'inverse. Lorsque le ressort 38 est suffisamment armé, la vis 36 peut entraîner en rotation la denture 31 pour faire tourner les rampes 32, afin d'augmenter l'épaisseur du plateau de pression pour compenser l'usure des garnitures du disque de friction pour que le diaphragme occupe la même position.

Pour plus de précisions, on se reportera à la demande FR-A-9 611 397 du 17 septembre 1995 dont le contenu est considéré comme annexé à la présente invention.

La cale 7, 8, selon l'invention, évite donc une détérioration de la cassette 30, plus précisément de son organe élastique 39 et de sa languette de commande.

On notera que les doigts 42 présentent une extrémité interne 45, décalée axialement par rapport à la zone d'enracinement 46 des doigts 42 à la rondelle Belleville 41. Cette zone 46 est dans le plan de la rondelle 41 et comporte les orifices 44. Elle se raccorde par un tronçon oblique 146 à l'extrémité interne 45 décalée axialement en direction opposée du fond 21 du couvercle.

L'anneau 8 présente à sa périphérie interne un bourrelet 85 dirigé axialement en direction opposée au fond 21 du couvercle 2 pour contact local avec l'extrémité interne 45. Les pattes 7 sont dans le plan de l'anneau 8.

Ainsi, les pattes 7 prennent appui contre la face interne, dirigée vers les doigts 42, des pattes de butée 5 et le bourrelet 85 est en contact avec la face externe de l'extrémité interne 45 du diaphragme.

La cale 7, 8 ne fait donc pas saillie axialement par rapport au fond 21 du couvercle et le plateau de pression est rentré, en sorte que le mécanisme d'embrayage est peut encombrant axialement.

Après fixation du couvercle 2 par vissage au plateau de réaction 100, on appuie sur l'anneau 8, comme pour débrayer, et on tourne l'anneau selon la flèche de la figure 1 pour démonter la cale 7, 8.

On notera qu'une languette 51 est fixée par rivetage à la périphérie interne du plateau de pression par rivetage. Cette languette 51 s'étend tangentiellement par rapport à une circonférence de l'ensemble et présente une protubérance radiale 52 pour coopérer avec l'une des rampes 32. La languette 51 s'étend donc en majeure partie sous la rampe.

Ainsi, la pièce unique 31, 33, 3, 32, en forme d'anneau en tôle emboutie, est pincée au niveau d'une rampe 32, plus précisément au niveau de la rampe 32, en regard de la cassette 30, entre la languette 51, ici axialement élastique, et le plot 13 concerné.

Ainsi, en cas de vibrations axiales, engendrées par le vilebrequin du moteur ou lors d'une surcourse du diaphragme, lors de l'opération de débrayage, les rampes ne tournent pas et aucun rattrapage d'usure ne se produit.

Le plateau de pression 1 porte donc l'anneau creux 31, 32, 33, 3 - formant moyens de rampes - et est d'épaisseur variable entre sa face de friction 11 et les moyens d'appui 3 pour compenser l'usure des garnitures de friction.

En variante, les moyens de rampes sont formés par la face dorsale de l'appui primaire, en contact avec des contre-rampes formées dans le fond du couvercle comme décrit dans le document FR-A-2 684 151, dont le contenu est considéré comme annexé à la présente invention.

En intercalant la cale à pièce de support 8 et des pattes de calage 7 selon l'invention entre les pattes de butée, ménagées à la périphérie interne du fond du couvercle et la périphérie interne des doigts du diaphragme. Dans ce cas, on ménage au montage le ressort de détection d'usure, portant l'appui secondaire.

Bien entendu, le mécanisme d'embrayage peut ne pas comporter de dispositif de rattrapage d'usure (figure 9) Le diaphragme 4 est alors de forme plane et les pattes de calage 7 sont décalées axialement en direction des doigts 42, par rapport à l'anneau de support 8 des pattes 7, monobloc avec lesdites pattes. L'anneau 8 présente à sa périphérie interne un rebord d'orientation axiale 81 pour contact local avec la périphérie interne du diaphragme.

On notera que les pattes de calage 7 sont en contact avec la face interne des pattes de buttée 5 et qu'un jeu axial existe, comme dans les figures 1 à 8, entre les pattes et les doigts 42.

Dans tous les cas, les pattes de calage 7 sont décalées axialement par rapport à la périphérie interne de la pièce de support 8, formé par le rebord 81 ou le bourrelet 85.

Bien entendu, l'anneau 8 peut être équipé de moyens de préhension pour sa rotation à l'aide d'un outil afin d'amener les pattes de calage sous les pattes de butée.

L'anneau 8 peut, à la manière d'un bouton de commande, être doté d'une barrette saillante en direction opposée au diaphragme. Les moyens 9 peuvent donc consister en des saillies. D'une manière générale, la longueur circonférentielle d'une patte de calage 7 est inférieure à la longueur circonférentielle entre deux pattes de butée 5 consécutives pour que les pattes 7 puissent être introduites dans les échancrures 6 afin d'effectuer le montage baïonnette.

Des ouvertures peuvent être ménagées entre deux doigts 42 consécutifs formant leviers de débrayage pour passage d'un ou de plusieurs outils permettant un accès à des vis de fixation du plateau de réaction au vilebrequin du moteur du véhicule. Dans ce cas, les trous 9 des figures 1 à 8 sont en regard des dites ouvertures pour démontage du plateau de réaction fixé directement ou indirectement, par exemple par l'intermédiaire d'un flasque ou d'une masse, au vilebrequin.

De manière précitée, les moyens embrayeurs peuvent comporter une ou plusieurs rondelle(s) Belleville montée(s) en série, les moyens débrayeurs peuvent être distincts des moyens débrayeurs.

Les languettes 10 peuvent être d'orientation radiale.

Dans tous les cas, les languettes constituent des moyens pour lier en rotation le plateau de pression au couvercle tout en autorisant un mouvement axial du plateau de pression par rapport au couvercle.

Les pattes de butées, dirigées radialement vers l'intérieur, c'est-à-dire vers l'axe X-X peuvent être également des pattes de fixation ; les pattes de calage 7 passant alors sous les moyens de fixation portées par les pattes de butées lors du montage baïonnette.

Le décalage axial des pattes de calage par rapport à la périphérie interne de la pièce de support facilite le montage et crée un jeu entre les pattes de calage et les leviers de débrayage baïonnette.

Les leviers de débrayage 42 sont, dans tous les cas, en contact avec les moyens embrayeurs en appui direct avec les moyens d'appui 3 ou en appui indirect sur les moyens d'appui 3 par l'intermédiaire des leviers de débrayage. Les moyens débrayeurs agissent à volonté sur les moyens embrayeurs.

En variante, les moyens embrayeurs peuvent consister en une pluralité de ressorts à boudin prenant appui sur un faux diaphragme et sur le couvercle.

Bien entendu, les pattes de calage 7 peuvent être rapportées à la fixation sur la pièce de support, par exemple par rivetage, soudage, etc.

Les moyens d'appui 3 peuvent être mobiles par rapport au plateau de pression, comme dans les figures 1 à 8, pour faire varier, par l'intermédiaire des rampes 32 et contre-rampes 13, l'épaisseur du plateau de pression, ou être monobloc avec le plateau de pression (figure 9).

Bien entendu, la cassette peut avoir une autre forme comme décrit par exemple dans le document PCT/FR99/00261 déposé le 5 février 1998.

Ainsi, à la lumière de cette demande PCT/Fr99/00261, l'organe élastique peut former à lui seul le support de la cassette. Le ressort de rattrapage peut être disposé hors de la cassette en étant par exemple implanté entre un plot et une rampe. Dans ce cas, le logement du couvercle peut constituer le support de la cassette.

Bien entendu, le rebord 33 peut être lié en rotation à une pièce intermédiaire portant la denture 31 et calée axialement sur le couvercle à l'aide par exemple de prolongements issus de deux languettes 10 superposées. Une liaison intervient ainsi entre une pièce intermédiaire et l'anneau 200 pour autoriser un mouvement axial du plateau de pression par rapport à la pièce intermédiaire tout en liant en rotation cette pièce intermédiaire à l'anneau 200. Une telle disposition est décrite dans le document FR98/11991 déposé le 23 septembre 1998 auquel on se reportera pour plus de précisions.

Bien entendu, des moyens de freinage comportant la languette 51 peuvent être remplacés par exemple par un jonc de freinage intervenant entre l'anneau 200 et le plateau de pression. Pour plus de précisions, on se reportera par exemple au document FR98/14448 du 17 novembre 1998.

## Revendications

1. Mécanisme d'embrayage comportant un couvercle (2) doté d'un fond (21) d'orientation transversale troué centralement et-pourvu à sa périphérie interne de pattes de butée (5) dirigées radialement vers l'intérieur, un plateau de pression (1) présentant frontalement un face de friction (11) et portant dorsalement des moyens d'appui (3), des moyens (10) pour lier en rotation le plateau de pression (1) au couvercle (2) tout en autorisant un mouvement axial du plateau de pression (1) par rapport au couvercle (2), des moyens embrayeurs (41) prenant appui sur le couvercle(2) pour action sur les moyens d'appui (3), des leviers de débrayage (42) montés de manière pivotante sur le couvercle (2) pour action sur les moyens embrayeurs
**caractérisé en ce qu'**une pièce de support (8) porte à sa périphérie externe des pattes de calage (7) saillantes radialement vers l'extérieur, **en ce que** la pièce de support (8) est en contact avec une moins une pluralité des leviers de débrayage (42), tandis que les pattes de calage (7) sont en contact avec la face de certaines au moins des pattes de butée (5) tournée vers les leviers de débrayage (42) en sorte que les pattes de calage et la pièce de support sont insérées axialement entre les leviers de débrayage et les pattes de butées par un montage du type baïonnette.

2. Mécanisme selon la revendication 1, **caractérisé en ce que** les pattes de calage (7) sont décalées axialement par rapport à la périphérie interne de la pièce de support (8),

3. Mécanisme selon la revendication 2, **caractérisé en ce que** la pièce de support présente à sa périphérie interne un bourrelet (85) dirigé en direction opposée au fond (21) du couvercle (2) pour contact avec les extrémités interne de certains au moins des leviers de débrayage (42),

4. Mécanisme selon la revendication 3, **caractérisé en ce que** l'extrémité interne (45) d'un levier de débrayage (42) est décalée axialement en direction opposée au fond (21) du couvercle (2),

5. Mécanisme selon la revendication 3, **caractérisé en ce que** la périphérie interne de la pièce de support (8) présente un rebord annulaire d'orientation axiale pour contact avec certains au moins des leviers de débrayage (42),

6. Mécanisme selon la revendication 1, **caractérisé en ce que** la pièce de support (8) présente des moyens (9) pour venir en prise avec un outil permettant de faire tourner la pièce de support (8),

7. Mécanisme selon la revendication 6, **caractérisé en ce que** les dits moyens consistent en des trous (9),

8. Mécanisme selon la revendication 7, **caractérisé en ce que** les dits moyens consistent en une saillie,

9. Mécanisme selon la revendication 1, **caractérisé en ce que** les pattes de calage (7) sont monoblocs avec la pièce de support (8),

10. Mécanisme selon la revendication 1, **caractérisé en ce que** la pièce de support (8) est en forme d'anneau fermé,

11. Mécanisme selon la revendication 1, **caractérisé en ce que** la pièce de support est en forme d'anneau ouvert,

12. Mécanisme selon la revendication 1, **caractérisé en ce que** les moyens embrayeurs (41) comporte une rondelle Belleville (41) prolongée radialement vers l'intérieur par les leviers de débrayage (42) pour formation d'un diaphragme (4),

13. Mécanisme selon la revendication 12, **caractérisé en ce qu'**il comporte un dispositif le dispositif de rattrapage d'usure,

14. Mécanisme selon la revendication 13, **caractérisé en ce que** le dispositif de rattrapage d'usure comporte une cassette (30) fixée sur le couvercle (2) et comportant une vis sans fin (36) pour action sur une denture (31) solidaire des moyens d'appui (3), mobiles par rapport au plateau de pression.

## Patentansprüche

1. Kupplungsmechanismus, umfassend einen Deckel (2) mit einem quer ausgerichteten mittig gelochten Boden (21), der an seinem inneren Umfang mit radial nach innen gerichteten Anschlagansätzen (5) versehen ist, eine Druckplatte (1), die stimseitig eine Reibfläche (11) aufweist und rückseitig Auflagemittel (3) trägt, Mittel (10) zur drehfesten Verbindung der Druckplatte (1) mit dem Deckel (2), wobei sie gleichzeitig eine axiale Bewegung der Druckplatte (1) im Verhältnis zum Deckel (2) ermöglichen, Einrückmittel (41), die am Deckel (2) zur Anlage kommen, um auf die Auflagemittel (3) einzuwirken, und Ausrückhebel (42), die schwenkbar am Deckel (2) gelagert sind, um auf die Einrückmittel einzuwirken, **dadurch gekennzeichnet, dass** ein Trägerteil (8) an seinem äußeren Umfang radial nach außen vorstehende Sicherungsansätze (7) trägt, dass das Trägerteil (8) wenigstens mit einer Mehrzahl der Ausrückhebel (42) in Kontakt steht, während die Sicherungsansätze (7) mit der zu den Ausrückhebeln (42) gerichteten Fläche wenigstens einiger der Anschlagansätze (5) in Kontakt stehen, so dass die Sicherungsansätze und das Trägerteil axial zwischen den Ausrückhebeln und den Anschlagansätzen durch eine Bajonettmontage eingefügt sind.

2. Mechanismus nach Anspruch 1, **dadurch gekennzeichnet, dass** die Sicherungsansätze (7) im Verhältnis zum inneren Umfang des Trägerteils (8) axial versetzt sind.

3. Mechanismus nach Anspruch 2, **dadurch gekennzeichnet, dass** das Trägerteil an seinem inneren Umfang einen Wulst (85) aufweist, der in der zum Boden (21) des Deckels (2) entgegengesetzten Richtung verläuft, um den Kontakt mit den inneren Enden wenigstens einiger der Ausrückhebel (42) herbeizuführen.

4. Mechanismus nach Anspruch 3, **dadurch gekennzeichnet, dass** das innere Ende (45) eines Ausrückhebels (42) in der zum Boden (21) des Deckels (2) entgegengesetzten Richtung axial versetzt ist.

5. Mechanismus nach Anspruch 3, **dadurch gekennzeichnet, dass** der innere Umfang des Trägerteils (8) eine axial ausgerichtete ringförmige Randleiste für den Kontakt wenigstens mit einigen der Ausrückhebel (42) aufweist.

6. Mechanismus nach Anspruch 1, **dadurch gekennzeichnet, dass** das Trägerteil (8) Mittel (9) aufweist, um mit einem Werkzeug in Eingriff zu kommen, das das Drehen des Trägerteils (8) ermöglicht.

7. Mechanismus nach Anspruch 6, **dadurch gekennzeichnet, dass** die besagten Mittel aus Löchern (9) bestehen.

8. Mechanismus nach Anspruch 7, **dadurch gekennzeichnet, dass** die besagten Mittel aus einem Vorsprung bestehen.

9. Mechanismus nach Anspruch 1, **dadurch gekennzeichnet, dass** die Sicherungsansätze (7) einteilig mit dem Trägerteil (8) ausgeführt sind.

10. Mechanismus nach Anspruch 1, **dadurch gekennzeichnet, dass** das Trägerteil (8) in Form eines geschlossenen Rings ausgeführt ist.

11. Mechanismus nach Anspruch 1, **dadurch gekennzeichnet, dass** das Trägerteil in Form eines offenen Rings ausgeführt ist.

12. Mechanismus nach Anspruch 1, **dadurch gekennzeichnet, dass** die Einrückmittel (41) eine Telferfeder (41) umfassen, die radial nach innen durch die Ausrückhebel (42) verlängert werden, um eine Membranfeder (4) zu bilden.

13. Mechanismus nach Anspruch 12, **dadurch gekennzeichnet, dass** er eine Verschleißnachstellvorrichtung umfasst.

14. Mechanismus nach Anspruch 13, **dadurch gekennzeichnet, dass** die Verschleißnachstellvorrichtung eine Kassette (30) umfasst, die am Deckel (2) befestigt ist und eine Schnecke (36) enthält, um auf eine Zahnung (31) einzuwirken, die fest mit den im Verhältnis zur Druckplatte beweglichen Auflagemitteln (3) verbunden ist.

## Claims

1. Clutch mechanism comprising a cover (2) provided with a transversely oriented bottom (21) with a central hole and provided at its internal periphery with stop lugs (5) directed radially towards the inside, a pressure plate (1) having a friction face (11) at the front and carrying on the back abutment means (3), means (10) for rotationally connecting the pressure plate (1) to the cover (2) whilst allowing an axial movement of the pressure plate (1) with respect to the cover (2), engagement means (41) abutting on the cover (2) for action on the abutment means (3), disengagement levers (42) mounted pivotally on the cover (2) for action on the engagement means, **characterised in that** a support piece (8) carries at its external periphery fixing lugs (7) projecting radially towards the outside, **in that** the support piece (8) is in contact with at least a plurality of disengagement levers (42), whilst the fixing lugs (7) are in contact with the face of at least some of the stop lugs (5) turned towards the disengagement levers (42) so that the fixing lugs and the support piece are inserted axially between the disengagement levers and the stop lugs by a mounting of the bayonet type.

2. Mechanism according to Claim 1, **characterised in that** the fixing lugs (7) are offset axially with respect to the internal periphery of the support piece (8).

3. Mechanism according to Claim 2, **characterised in that** the support piece has at its internal periphery a rim (85) directed in the direction opposite to the bottom (21) of the cover (2) for contact with the internal ends of at least some of the disengagement levers (42).

4. Mechanism according to Claim 3, **characterised in that** the internal end (45) of a disengagement lever (42) is offset axially in the direction opposite to the bottom (21) of the cover (2).

5. Mechanism according to Claim 3, **characterised in that** the internal periphery of the support piece (8) has an axially oriented annular rim for contact with at least some of the disengagement levers (42).

6. Mechanism according to Claim 1, **characterised in that** the support piece (8) has means (9) for coming into engagement with a tool for turning the support piece (8).

7. Mechanism according to Claim 6, **characterised in that** the said means consist of holes (9).

8. Mechanism according to Claim 7, **characterised in that** the said means consist of a projection.

9. Mechanism according to Claim 1, **characterised in that** the fixing lugs (7) are in a single piece with the support piece (8).

10. Mechanism according to Claim 1, **characterised in that** the support piece (8) is in the form of a closed ring.

11. Mechanism according to Claim 1, **characterised in that** the support piece is in the form of an open ring.

12. Mechanism according to Claim 1, **characterised in that** the engagement means (41) comprise a Belleville washer (41) extended radially inwards by the disengagement levers (42) in order to form a diaphragm (4).

13. Mechanism according to Claim 12, **characterised in that** it comprises a wear take-up device.

14. Mechanism according to Claim 13, **characterised in that** the wear take-up device comprises a cartridge (30) fixed to the cover (2) and comprising a worm (36) for acting on teeth (31) integral with the abutment means (3), able to move with respect to the pressure plate.
